# EUROPÄISCHE PATENTANMELDUNG

(11) **EP 1 604 800 A2**
(43) Veröffentlichungstag der Anmeldung: **14.12.2005**
(21) Anmeldenummer: 04015843.8
(22) Anmeldetag: 06.07.2004
(51) Int. Cl.: B29C 47/00, B29C 47/34

(54) **Wendestangenabzug für eine Schlauchfolienextrusionsanlage**

(30) Priorität: 09.06.2004 DE 202004009242 U
(71) Anmelder: Reifenhäuser GmbH & Co. Maschinenfabrik, 53839 Troisdorf (DE)
(72) Erfinder: Meyer, Helmut, 53842 Troisdorf (DE)
(74) Vertreter: Wagner, Matthias

(57) **Zusammenfassung**

Die Erfindung betrifft einen Wendestangenabzug für eine Schlauchfolienextrusionsanlage mit mehreren mittels Drehantrieben um eine gemeinsame Drehachse (D) rotierend oder reversierend antreibbaren Wendestangen (51,52,53,54), wobei zur rotierenden bzw. reversierenden Führung der Wendestangen (51,52,53,54) um die Drehachse (D) jede Wendestange an ihren Enden mit Führungswagen (55) verbunden ist, die auf kreisringförmig angeordneten Führungsschienen (56) geführt sind.

## Beschreibung

Die Erfindung betrifft einen Wendestangenabzug für eine Schlauchfolienextrusionsanlage mit mehreren mittels Drehantrieben um eine gemeinsamen Drehachse rotierend oder reversierend antreibbaren Wendestangen.

Derartige Wendestangenabzüge für Schlauchfolienextrusionsanlagen sind vielfältig bekannt, wozu nur beispielsweise auf die DE 21 56 079 C2 verwiesen wird. Sie dienen dazu, die zuvor in der Schlauchfolienextrusionsanlage extrudierte und dem Wendestangenabzug zugeführte Schlauchfolie mehrfach umzulenken und an eine nachfolgende Aufwicklungseinrichtung abzuführen, wobei die mehrfache Umlenkung der Schlauchfolienbahn über die Wendestangen aufeinanderfolgend erfolgt. Infolge der mittels Drehantrieben bewirkten Rotations- bzw. Reversierbewegungen der Wendestangen um eine gemeinsame Drehachse, die üblicherweise mit der Achse des zugeführten Folienschlauches zusammenfällt, werden Dickentoleranzen in der extrudierten Schlauchfolie gleichmäßig über die Breite derselben im aufgewickelten Zustand verteilt, so daß ein gleichmäßiges Wickelergebnis sichergestellt wird.

Während die bisher bekannten Wendestangenabzüge hinsichtlich ihrer Funktion bereits zufriedenstellend sind, gestaltet sich jedoch ihr mechanischer Aufbau infolge der mit zum Teil unterschiedlichen Rotations- bzw. Reversiergeschwindigkeiten anzutreibenden Wendestangen als extrem aufwendig und kostenintensiv, was verbesserungswürdig erscheint.

Aufgabe der Erfindung ist es daher, einen Wendestangenabzug der eingangs genannten Art in seinem mechanischen Aufbau zu vereinfachen, so daß er kompakter und mit geringerem Aufwand als die bisher üblichen Wendestangenabzüge herstellbar ist.

Zur Lösung der gestellten Aufgabe wird erfindungsgemäß die Ausbildung eines Wendestangenabzuges gemäß den Merkmalen des Patentanspruches 1 vorgeschlagen.

Vorteilhafte Ausgestaltungen und Weiterbildungen des erfindungsgemäßen Wendestangenabzuges sind in den Unteransprüchen angegeben.

Die erfindungsgemäße Lösung sieht vor, daß zur rotierenden bzw. reversierenden Führung der Wendestangen um die Drehachse jede Wendestange an ihren Enden mit Führungswagen verbunden ist, die ihrerseits auf kreisringförmig angeordneten Führungsschienen geführt sind. Hierbei kommen sowohl gleitende als auch rollende Führungen in Betracht.

Durch diese erfindungsgemäße Ausbildung kann die bisherige aufwendige und kostenintensive Bauweise mit einer Vielzahl von Drehlagern für die drehbare Lagerung der einzelnen rotierend oder reversierend antreibbaren Wendestangen auf überraschend einfache Weise überwunden werden, wobei zusätzlich eine außerordentlich kompakte und stabile Bauweise erreicht wird.

Die für die rotierende bzw. reversierende Führung der Wendestange eingesetzten Führungsschienen und Führungswagen können von den bisher bekannten Linearführungssystemen mit geradlinigen Führungsschienen und entsprechend hierauf geführten Führungswagen abgeleitet werden, sofern die Führungsschienen einen entsprechend kreisringförmigen Verlauf für die rotierende bzw. reversierende Führung der Wendestangen aufweisen.

Damit eine ruckfreie und verkantungsfreie Führung der unter Umständen ein beträchtliches Gewicht aufweisenden Wendestangen ermöglicht wird, weisen die Führungsschienen entlang ihrer kreisringförmigen Innen- und Außenseite bevorzugt je eine Führungsnut auf, wobei die Führungswagen eine hierzu korrespondierende hinterschnittene Gleitnut aufweisen, mit der sie in den Führungsnuten der Führungsschienen geführt sind.

Hierbei ist es möglich, die Führungswagen mittels ebener Geitflächen entlang der Führungsnuten der Führungsschienen zu führen oder aber auch die Führungswagen mit an der Führungsnut der Führungsschienen abrollenden Wälzkörpern auszurüsten.

Zur Schaffung eines besonders kompakten Wendestangenabzuges schlägt die Erfindung darüber hinaus vor, mehrere Wendestangen mit ihren jeweiligen Führungswagen auf einer gemeinsamen Führungsschiene zu führen. Beispielsweise ist es bei einem Wendestangenabzug mit insgesamt vier rotierend bzw. reversierend mit unterschiedlichen Geschwindigkeiten antreibbaren Wendestangen möglich, zwei dieser Wendestangen auf jeweils eigenen Führungsschienen mit ihren entsprechenden Führungswagen zu führen, während zwei weitere Wendestangen mit ihren entsprechenden Führungswagen auf einer gemeinsamen weiteren Führungsschiene geführt werden, so daß insgesamt für die z. B. vier rotierend bzw. reversierend antreibbaren und entsprechend zu führenden Wendestangen lediglich drei Führungsschienen benötigt werden, was einen besonders kompakten Aufbau des Wendestangenabzuges begünstigt und darüber hinaus durch Einsparung einer weiteren Führungsschiene deutliche Kostenvorteile mit sich bringt.

Bevorzugt sind die einer Wendestange zugeordneten Führungswagen mittels einer Traverse starr miteinander verbunden. Eine solche Traverse kann je nachdem, ob sie einer rotierend bzw. reversierend angetriebenen Wendestange zugeordnet ist und/oder allein auf einer ihr zugeordneten Führungsschiene oder gemeinsam mit weiteren Führungswagen einer weiteren Traverse auf einer gemeinsamen Führungsschiene angeordnet ist, wiederum ringförmig oder lediglich ringsegmentförmig ausgebildet sein, wobei ihr Durchmesser bevorzugt in etwa dem der zugeordneten Führungsschiene entsprechend ausgebildet ist.

Für die Führung einer Wendestange werden hierbei mindestens zwei Führungswagen über eine solche Traverse miteinander verbunden, je nach Größe und Gewicht sowie vorherrschenden Platzverhältnissen können jedoch auch mehrere solcher Führungswagen, beispielsweise vier oder sechs Führungswagen über eine gemeinsame Traverse starr miteinander verbunden werden und die Führung einer zugeordneten Wendestange bewirken.

Es ist weiterhin von Vorteil, wenn jede Traverse einen Zahnkranz oder ein Zahnkranzsegment umfaßt, welche mit dem Drehantrieb für die Wendestangen in Wirkverbindung stehen. Sofern die Traverse ringförmig ausgebildet ist, umfaßt sie bevorzugt auch einen ringförmigen Zahnkranz, während sie bei lediglich ringsegmentförmiger Ausbildung auch nur ein entsprechendes Zahnkranzsegment umfaßt, mittels dessen ein Reversierantrieb bewirkbar ist.

In einer besonders bevorzugten Ausführungsform der Erfindung, bei der wiederum der einfache und kompakte Aufbau des erfindungsgemäßen Wendestangenabzuges im Vordergrund steht, sind alle Wendestangen über einen gemeinsamen Drehantrieb rotierend bzw. reversierend antreibbar. Zu diesem Zweck kann z. B. ein gemeinsamer Antriebsmotor mit mehreren Getriebestufen vorgesehen werden, wobei jede einzelne Getriebestufe mit einem Zahnkranz oder Zahnkranzsegment der den jeweiligen Wendestangen zugeordneten Traversen in Wirkverbindung steht. Auf diese Weise wird nicht nur der Aufbau des Drehantriebes stark vereinfacht, sondern auch der Regelungsaufwand für den Betrieb des erfindungsgemäßen Wendestangenabzuges verringert, da die gewünschten Drehzahlen gleichsam über den gemeinsamen Drehantrieb bereitgestellt werden.

Wie bereits vorangehend ausgeführt, sind die Wendestangen mit voneinander verschiedenen Rotations- bzw. Reversiergeschwindigkeiten antreibbar. Auch können sie in unterschiedlichen Drehrichtungen unabhängig voneinander angetrieben werden.

Für den gewünschten kompakten Aufbau des erfindungsgemäßen Wendestangenabzuges ist es ferner von Vorteil, wenn die Führungsschienen bei der üblicherweise vertikal verlaufenden Drehachse der Wendestangen demgemäß auch vertikal übereinander angeordnet sind, wobei die jeweiligen Führungswagen und Traversen sehr kompakt gehalten sind und von daher nur wenig Platz zwischen den einzelnen vertikal übereinander angeordneten Führungsschienen benötigen.

Je nach Platzverhältnissen und weiteren Einbaugegebenheiten können die Führungswagen wahlweise oberhalb der Führungsschienen aufsitzend oder auch unterhalb der Führungsschiene hängend an diesen geführt werden.

Im Normalfall ist es bevorzugt, die Führungswagen und Führungsschienen aus verschleißfesten Materialien, beispielsweise hochfesten Stählen herzustellen, so daß eine über die Lebensdauer des Wendestangenabzuges wartungsfreie Funktion der Führungsschienen und Führungswagen hergestellt werden kann. Diese Wartungsfreiheit kann überdies durch Ausbildung der Führungswagen mit einer geschlossenen Schmierstoffkassette für eine wartungsfreie Schmierung gegenüber der Führungsschiene gesteigert werden.

Sollte es dennoch zu einem Ausfall eines einzelnen Führungswagens z. B. infolge Verschleiß kommen, sind bevorzugt die Führungsschienen in einem kurzen Teilabschnitt ihres kreisringförmigen Verlaufs mit einem herausnehmbaren Öffnungsstück ausgebildet, welches gegen ein mit einem Ersatzführungswagen bestücktes Ersatzstück austauschbar ist. Auf diese Weise ist im Falle eines Defekts eines Führungswagens ein einfaches Auswechseln des defekten Führungswagens möglich, ohne Notwendigkeit, den gesamten Wendestangenabzug vorher zu demontieren. Hierzu wird lediglich zunächst das herausnehmbare Öffnungsstück aus der Führungsschiene entfernt und sodann der defekte Führungswagen in den nunmehr geöffneten Bereich der Führungsschiene, in welchem sich vorher das Öffnungsstück befand, verschoben. Sodann kann der Führungswagen von den weiteren Teilen des Wendestangenabzuges demontiert werden und zugleich der Ersatzführungswagen, welcher sich auf dem Ersatzstück der Führungsschiene vormontiert befindet, an diesem Einbauort befestigt werden. Nach der Befestigung des Ersatzführungswagens befindet sich auch das Ersatzstück der Führungsschiene anstelle des herausgenommenen Öffnungsstückes wiederum in der Führungsschiene und die ursprüngliche Funktion ist wiederhergestellt.

Neben der Ausbildung der Führungsschienen mit einem in einem kurzen Teilabschnitt herausnehmbaren Öffnungsstück ist es darüber hinaus bevorzugt, die Führungsschienen aus mehreren Segmenten einer einfach handhabbaren und herstellbaren Größe zusammenzufügen.

In analoger Weise ist es beim erfindungsgemäßen Wendestangenabzug auch möglich, die dem Wendestangenabzug üblicherweise vorgelagerte Flachlegeeinrichtung für die Schlauchfolie, welche bei einem Wendestangenabzug ebenfalls rotierend bzw. reversierend angetrieben werden kann, ebenfalls über einen Drehantrieb mit Führungswagen und einer Führungsschiene, wie sie vorangehend beschrieben worden sind, rotierend oder reversierend anzutreiben, da die erfindungsgemäßen Führungsschienen ohne weiteres in der Lage sind, auch das hohe Gewicht einer Flachlegeeinrichtung zuverlässig zu tragen. Zu diesem Zweck wird die Flachlegeeinrichtung mit hängend an einer Führungsschiene geführten Führungswagen befestigt und kann zusätzlich zur Erfüllung von Sicherheitsanforderungen mittels Fanghaken gegen ein Abstürzen aus dieser hängenden Position gesichert werden.

Weitere Ausgestaltungen und Einzelheiten der Erfindung werden nachfolgend anhand eines Ausführungsbeispieles in der Zeichnung näher erläutert. Es zeigen:
- Figur 1: in schematisierter Aufsicht das Prinzip des erfindungsgemäßen Wendestangenabzuges,
- Figur 2: in perspektivischer Darstellung einen erfindungsgemäßen Wendestangenabzug in konkreter Ausführung,
- Figur 3: die Seitenansicht des Wendestangenabzuges gemäß Figur 2,
- Figur 4: in vergrößerter Darstellung die Einzelheit X aus Figur 3,
- Figur 5a: die Aufsicht auf eine mit Führungswagen bestückte Führungsschiene,
- Figur 5b: in vergrößerter Darstellung die Einzelheit Y gemäß Figur 5a,
- Figur 6: den Schnitt gemäß Pfeilen A-A in Figur 5b,
- Figur 7: die Seitenansicht gemäß Pfeil B in Figur 5b,
- Figur 8: die Seitenansicht einer Schlauchfolienextrusionsanlage mit erfindungsgemäßem Wendestangenabzug.

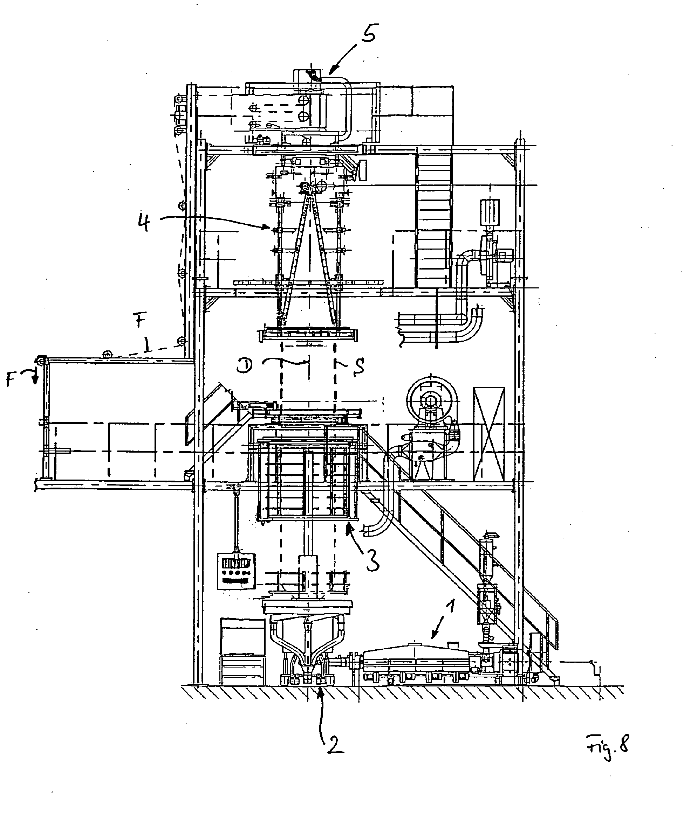

In der Figur 8 ist in einer Seitenansicht eine Schlauchfolienextrusionsanlage in ihren wesentlichen Bauteilen dargestellt. Sie umfaßt mindestens einen Extruder 1 mit nachgeordnetem Schlauchfolienextrusionswerkzeug 2, aus welchem eine Schlauchfolie S vertikal nach oben austritt und von einer Kalibriereinrichtung 3 auf ihren gewünschten Durchmesser kalibriert wird. Nach dem Durchlauf durch die Kalibriereinrichtung 3 gelangt die Schlauchfolie S in eine Flachlegeeinrichtung 4, von wo aus sie nach Durchlaufen eines Abquetschwalzenpaares als flachgelegte Folienbahn F an eine Abzugsvorrichtung 5 in Gestalt eines Wendestangenabzuges übergeben und von diesem die Folienbahn F einer nachfolgenden, hier jedoch nicht dargestellten Wickeleinrichtung zugeführt wird.

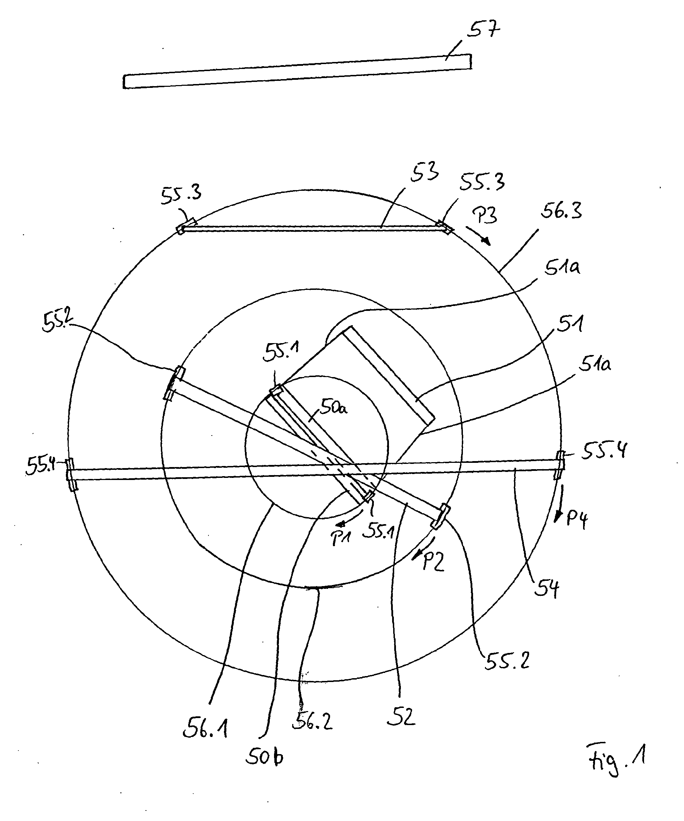

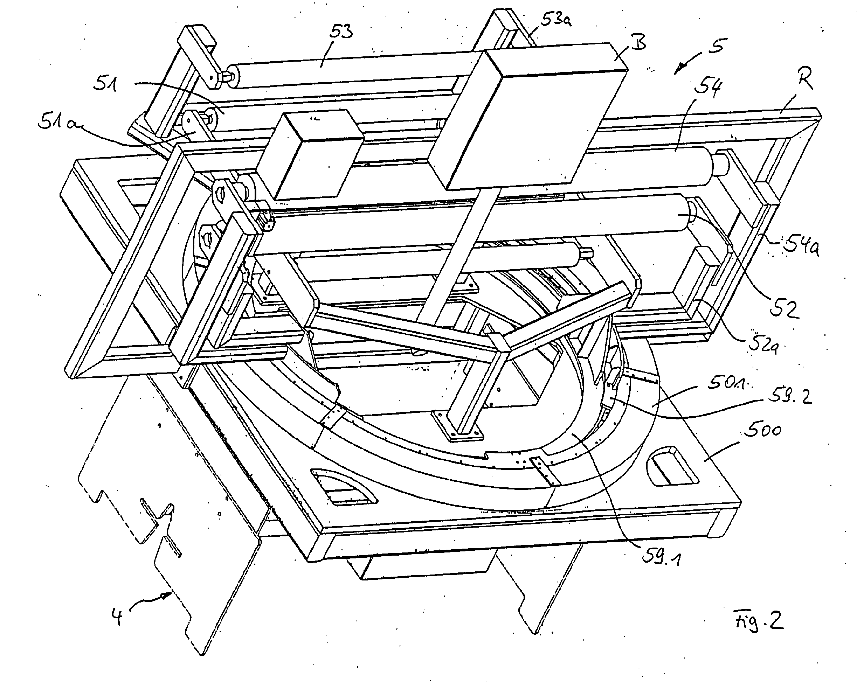

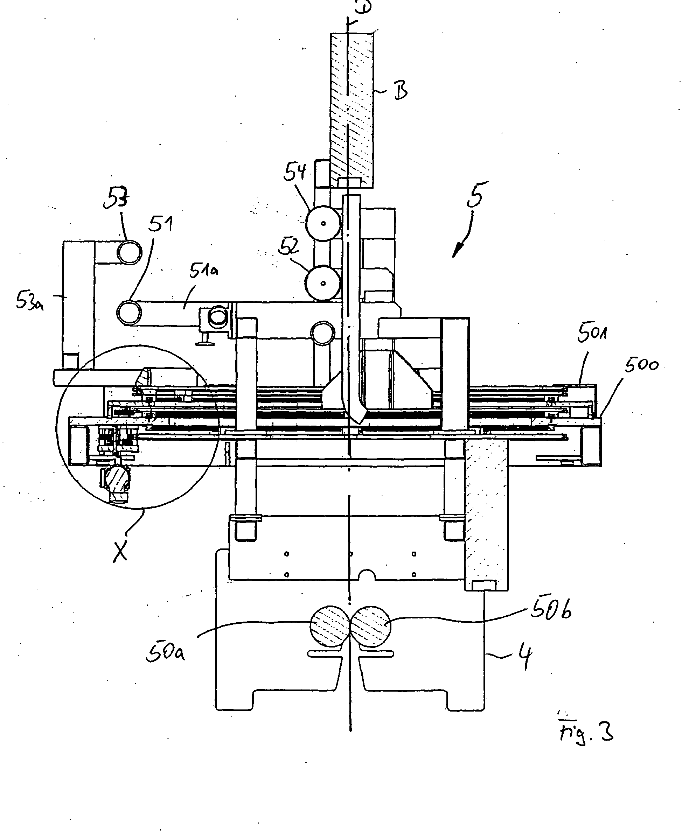

Der Wendestangenabzug 5 ist in weiteren Einzelheiten auch aus den Darstellungen gemäß Figur 2 und 3 ersichtlich.

Wie aus diesen Figuren 2 und 3 ersichtlich, ist der Wendestangenabzug 5 oberhalb der Abzugsvorrichtung 4 mit den beiden Abquetschwalzen 50a, 50b angeordnet und besteht in an sich bekannter Weise aus einer Mehrzahl, hier vier der Führung der flachgelegten Folienbahn dienenden Wendestangen, die entsprechend der Reihenfolge ihrer Umschlingung durch die Folienbahn mit Bezugsziffern 51, 52, 53, 54 gekennzeichnet sind. Über nachfolgend noch näher erläuterte Führungen sind die einzelnen Wendestangen über einen Drehantrieb um eine gemeinsame Drehachse D, welche der Achse der zugeführten Schlauchfolie S entspricht, siehe hierzu Figur 8, rotierend bzw. reversierend antreibbar, und zwar mit unterschiedlichen Rotations- bzw. Reversiergeschwindigkeiten, um die aus dem Stand der Technik bekannte Verteilung von Dickentoleranzen über die gesamten Breite der flachgelegten Folienbahn F zu bewirken.

Insbesondere aus der Darstellung gemäß Figur 2 ist ersichtlich, daß jede einzelne Wendestange 51, 52, 53, 54 über entsprechende Ausleger 51a, 52a, 53a, 54a, die an den jeweiligen Enden der Wendestangen 51, 52, 53, 54 angreifen, starr mit entsprechend zugeordneten Traversen 59 von ringförmiger bzw. ringsegmentförmiger Gestalt verbunden sind, die entsprechend ihrer Zuordnung zur ersten Wendestange 51 bis zur vierten Wendestange 54 mit 59.1, 59.2, 59.3, 59.4 nachfolgend bezeichnet sind.

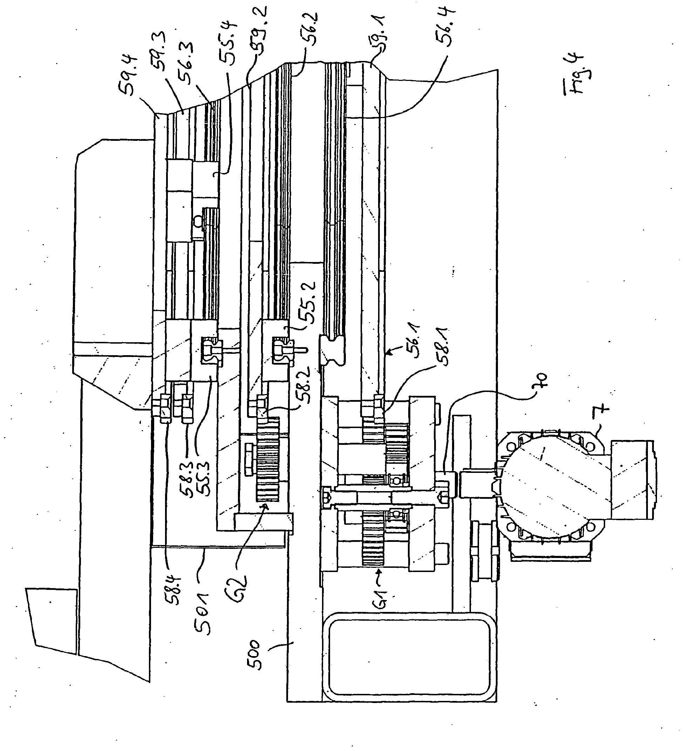

Der Drehantrieb und die Führung der drehbar um die gemeinsame Achse D rotierend bzw. reversierend antreibbaren Wendestangen 51, 52, 53, 54 ist in weiteren Einzelheiten aus der vergrößerten Darstellung gemäß Figur 4 ersichtlich.

An einem starren Rahmen 500 der Schlauchfolienextrusionsanlage bzw. des Wendestangenabzuges 5 sind drei mit Bezugsziffern 56.1, 56.2, 56.3 gekennzeichnete kreisringförmige Führungsschienen 56 vertikal übereinander befestigt, auf denen jeweilige mit Bezugsziffern 55.1, 55.2, 55.3, 55.4 gekennzeichnete Führungswagen 55 verschieblich, d. h. entlang des kreisringförmigen Umfanges der Führungsschienen 56 geführte Führungswagen 55 angeordnet sind.

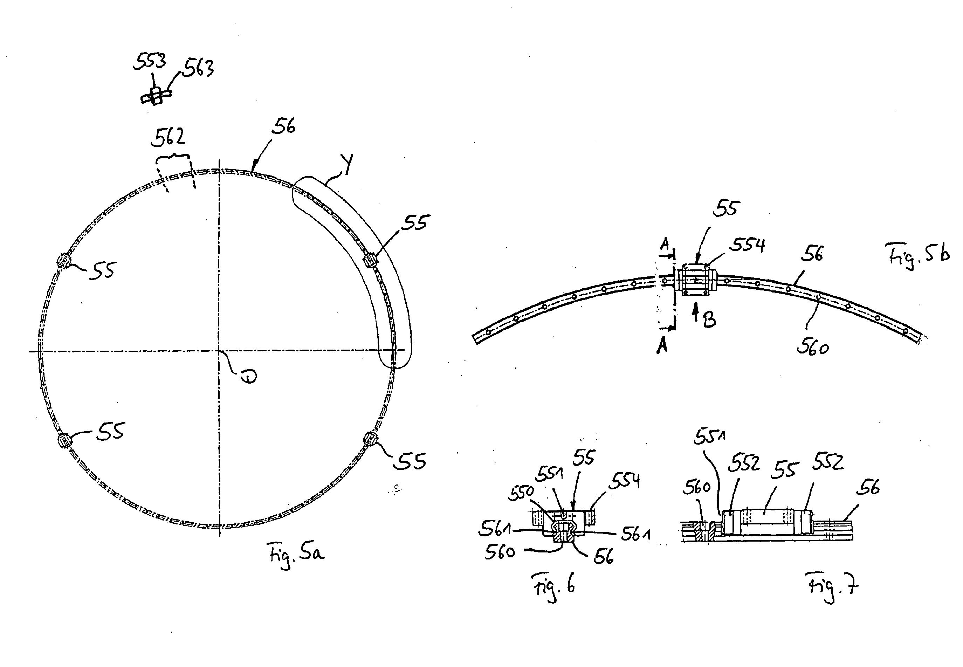

Zum besseren Verständnis ist eine einzelne solche Führungsschiene 56 mit insgesamt vier hierauf befestigten Führungswagen 55 in näheren Einzelheiten in den Figuren 5a bis 7 dargestellt.

Die Führungsschiene 56 weist eine Vielzahl von Befestigungsbohrungen 560 auf, mit welcher sie am Wendestangenabzug 5 ortsfest befestigbar ist. Entlang ihres kreisringförmigen Innen- und Außenumfanges ist sie jeweils mit einer seitlichen Führungsnut 561 ausgebildet und der auf der Führungsschiene 56 geführte Führungswagen 55 weist eine dementsprechend ausgebildete hinterschnittene Gleitnut 550 auf, so daß eine spielfreie Führung der Führungswagen 55 auf der Führungsschiene 56 gewährleistet ist.

Zur Schaffung einer ausreichenden Dauerbetriebsfestigkeit ist jeder Führungswagen 55 überdies mit einer abgedichteten Schmierstoffkassette 552 ausgebildet, die über einen Schmiernippel 551 mit Schmiermittel für die wartungsfreie Schmierung zwischen Führungswagen 55 und Führungsschiene 56 befüllt werden kann.

Darüber hinaus ist jeder Führungswagen 55 mit mehreren Befestigungsbohrungen 554 ausgebildet, über welche die Führungswagen 55 an aus der Darstellung in der Figur 4 ersichtlichen Traversen 59.1, 59.2, 59.3, 59.4 befestigbar sind.

Die gesamten Anordnung von Führungswagen 55, Führungsschienen 56 und Traversen 59 ist nunmehr so gewählt, daß jeweils eine Wendestange 51, 52, 53, 54 über ihre jeweils zugeordneten Ausleger 51 a, 52a, 53a, 54a starr mit einer zugeordneten Traverse 59.1, 59.2, 59.3, 59.4 verbunden ist. Jede dieser vorgenannten Traversen trägt wiederum eine Vielzahl, d. h. jeweils mindestens zwei Führungswagen 55.1, 55.2, 55.3, 55.4, die ihrerseits auf einer zugeordneten kreisringförmigen Führungsschiene 56.1, 56.2, 56.3 geführt sind.

Hierbei dienen die Führungsschienen 56.1 und 56.2 jeweils der Führung einer Wendestange, d. h. die zugeordnete Traverse 59.1 bzw. 59.2 weist lediglich starr über die Traverse miteinander verbundene Führungswagen 55.1, 55.2 auf, welche der Führung einer Wendestange dienen. Im Gegensatz dazu sind auf der Führungsschiene 56.3 zwei Gruppen von Führungswagen mit ihren zugeordneten Traversen gemeinsam angeordnet, nämlich die Führungswagen 55.3 mit Traverse 59.3 und Führungswagen 55.4 mit Traverse 59.4. Diese dienen dementsprechend auch der Führung von zwei Wendestangen, die demzufolge mit ihren jeweils zugeordneten Führungswagen 55.3 bzw. 55.4 gemeinsam auf einer Führungsschiene 56.3 angeordnet sind.

Durch die gewählte vertikal übereinander vorgenommene Anordnung der Führungsschienen 56.1, 56.2 und 56.3 sowie der insgesamt für die Führung von vier Wendestangen 51, 52, 53, 54 benötigten lediglich drei Führungsschienen 56.1, 56.2, 56.3 wird eine hochkompakte Anordnung zur Führung der vier Wendestangen 51, 52, 53, 54 geschaffen, die nach außen über eine gemeinsame Abdeckung 501 abgeschirmt ist.

Das zuvor erläuterte Prinzip der Führung der einzelnen Wendestangen 51, 52, 53, 54 auf lediglich drei kreisringförmig angeordneten Führungsschienen 56.1, 56.2, 56.3 ist schematisch auch aus der Aufsicht gemäß Figur 1 ersichtlich, welche die verschiedenen Wendestangen 51, 52, 53, 54 in einer Momentaufnahme während des Betriebs zeigt, wobei die im realen Ausführungsbeispiel gemäß Figuren 2, 3 und 4 übereinander angeordneten und im wesentlichen gleichen Durchmesser aufweisenden Führungsschienen 56.1, 56.2, 56.3 hier zur Vereinfachung der Darstellung abweichend als konzentrische Kreise mit unterschiedlichem Durchmesser dargestellt sind.

Man erkennt jedoch aus dieser schematischen Darstellung, daß jede Wendestange 51, 52, 53, 54 mit ihren jeweiligen Führungswagen 55.1, 55.2, 55.3, 55.4 auf je einer zugeordneten Führungsschiene 56.1, 56.2, 56.3, 56.4 geführt sind. Hierbei sind die Wendestangen 53 und 54 gemeinsam auf der Führungsschiene 56.3 geführt, während die Wendestange 51 allein auf der Führungsschiene 56.1 und die Wendestange 52 auf der Führungsschiene 56.2 geführt ist. Man erkennt ferner in der Prinzipskizze gemäß Figur 1 eine feststehende Umlenkwalze 57, über welche die flachgelegte und über die Wendestangen 51, 52, 53, 54 geführte Folienbahn der nachfolgenden Wickeleinrichtung zugeführt wird.

Es versteht sich, daß zur Führung einer einzelnen Wendestange 51, 52, 53, 54 jeweils mindestens zwei Führungswagen 55 auf einer Führungsschiene 56 notwendig sind, jedoch ist es bevorzugt, wie auch aus der Figur 5a ersichtlich, mindestens zwei, etwa hier vier oder auch sechs Führungswagen über eine gemeinsame Traverse 59 starr miteinander zu verbinden und zur Führung einer einzelnen Wendestange zu verwenden. Hierbei weist die Traverse 59 in Anpassung an die Führungsschiene 56 eine etwa kreisringförmige Gestalt auf.

Sofern es sich bei der zu führenden Wendestange jedoch um eine solche handelt, die lediglich eine Reversierbewegung um die Achse D von weniger als 360° ausführt, kann die Traverse auch lediglich kreissegmentförmig ausgebildet sein und mindestens zwei Führungswagen 55 starr miteinander für die Führung dieser Wendestange verbinden. Dies ist insbesondere auch von Vorteil, wenn mehrere Wendestangen entlang einer gemeinsamen Führungsschiene 56, z. B. wie in Figur 4 anhand der Führungsschiene 56.3 dargestellt, geführt werden.

Der Drehantrieb für die einzelnen an den Führungswagen 55 und Traversen 59 entlang der Führungsschienen 56 geführten Wendestange 51, 52, 53, 54 für die Rotations- oder Reversierbewegung um die Drehachse D ist im Detail aus der Figur 4 ersichtlich.

Man erkennt einen zentralen Drehantrieb mit einem Antriebsmotor 7, welcher eine zentrale Antriebswelle 70 in Rotation versetzt. Über mehrere aufeinanderfolgende Getriebestufen G1 und G2 werden Zahnräder der gewünschten Übersetzung zentral angetrieben, wobei diese Zahnräder mit am Außenumfang der jeweiligen Traversen 59.1, 59.2, 59.3 sowie 59.4 befestigten Zahnkränzen bzw. Zahnkranzsegmenten 58.1, 58.2, 58.3, 58.4 in Eingriff stehen. Im Ausführungsbeispiel gemäß Figur 4 ist der Zahnradeingriff bei den Zahnkränzen 58.3, 58.4 aus darstellerischen Gründen nicht zu sehen. Es ist jedoch offensichtlich, daß durch diesen zentralen Drehantrieb mit Antriebsmotor 7, Antriebswelle 70 und mehreren Getriebestufen G1, G2 ein gemeinsamer zentraler Antrieb aller Traversen und damit der daran befestigten Wendestangen 51, 52, 53, 54 mit den gewünschten Geschwindigkeiten, die in Figur 1 mit Pfeilen P1, P2, P3, P4 veranschaulicht sind, bewirkbar ist. Da es sich hierbei um starre Übersetzungsverhältnisse eines mehrstufigen Getriebes handelt, werden die unterschiedlichen Relativgeschwindigkeiten der einzelnen Wendestangen 51, 52, 53, 54 stets exakt eingehalten und von daher sowohl der bauliche wie auch der Regelungsaufwand des Wendestangenabzuges enorm vereinfacht.

Schließlich erkennt man in der Darstellung gemäß Figur 4 neben den vorangehend bereits erläuterten und der Führung der Wendestangen 51, 52, 53, 54 dienenden Führungsschienen 56.1, 56.2 sowie 56.3 noch eine weitere Führungsschiene 56.4, die jedoch nicht der Führung der Wendestangen dient. An dieser Führungsschiene 56.4 ist vielmehr in analoger Weise wie zuvor beschrieben die dem Wendestangenabzug vorgelagerte Flachlegeeinrichtung 4 befestigt und mittels eines Drehantriebes ebenfalls um die gemeinsame Drehachse D drehbar gelagert. Im Gegensatz zu den Führungsschienen 56.1, 56.2, 56.3, auf welchen die Führungswagen 55.1, 55.2, 55.3, 55.4 oberseitig aufsitzend geführt werden, ist hierbei die Flachlegeeinrichtung mittels weiterer, hier jedoch nicht dargestellter Führungswagen 55 unterseitig hängend an der Führungsschiene 56.4 geführt. Da auch diese Führungsschiene 56.4 aus einem hochfesten Stahl bevorzugt aus dem Vollen gefräst und infolge der aus der Figur 6 ersichtlichen seitlichen Führungsnuten 561 sowie der entsprechend ausgebildeten Gleitnut 550 des Führungswagens 55 formschlüssig mit letzterem verbunden ist, wird das hohe Gewicht der Flachlegeeinrichtung 4 problemlos getragen und ein leichter Lauf der Führungswagen entlang der Führungsschiene 56.4 ermöglicht. Die Flachlegeeinrichtung 4 kann darüber hinaus mittels .nicht näher dargestellter Fanghaken zusätzlich gegen ein eventuelles Herausfallen aus der Führungsschiene 56.4 gesichert werden, um die bestehenden Sicherheitsauflagen zu erfüllen.

Die vorangehend erläuterten und auf Führungsschienen 56 geführten Führungswagen 55 sind zwar für eine der Gesamtanlagenlebensdauer entsprechende Lebensdauer ausgelegt, jedoch kann für den Fall der Beschädigung oder des Ausfalls eines Führungswagens 55 vorgesehen sein, wie in Figur 5a angedeutet, daß die Führungsschiene 56 über einen kurzen Teilabschnitt ein herausnehmbares Öffnungsstück 562 umfaßt. Dieses Öffnungsstück 562 kann mittels Werkzeugen aus dem Verlauf der Führungsschiene 56 herausgenommen werden, so daß dann ein fehlerhafter Führungswagen in diesen Bereich verfahren werden kann und außer Eingriff mit der Führungsschiene 56 gerät. Nunmehr kann der defekte Führungswagen 56 ohne sonstige Demontage weiterer Teile z. B. von seiner zugeordneten Traverse abgenommen werden und ein Ersatzführungswagen 553, welcher sich auf einem dem Öffnungsstück 562 entsprechenden Ersatzstück 563 befindet, wird nachfolgend am Einbauort des zuvor entnommenen defekten Führungswagen 55 befestigt. Nunmehr überbrückt das Ersatzstück 563 die zuvor durch Herausnehmen des Öffnungsstückes 562 in der Führungsbahn 56 entstandene Lücke und es liegt wiederum eine geschlossene kreisringförmige Führungsbahn 56 mit funktionsfähigen Führungswagen 55 vor.

Mit dem vorangehen erläuterten Wendestangenabzug wird eine bedeutende Vereinfachung des bislang hochkomplizierten Antriebes sowie der Drehlagerung der einzelnen Wendestangen erreicht, wobei ein besonders kompakter und preiswert herzustellender Aufbau ermöglicht ist, der die bislang nur in hochpreisigen Schlauchfolienextrusionsanlagen verwendeten Wendestangenabzüge einem breiteren Anwendungsfeld zuführt.

## Patentansprüche

1. Wendestangenabzug für eine Schlauchfolienextrusionsanlage mit mehreren mittels Drehantrieben um eine gemeinsame Drehachse (D) rotierend oder reversierend antreibbaren Wendestangen (51, 52, 53, 54), **dadurch gekennzeichnet, daß** zur rotierenden bzw. reversierenden Führung der Wendestangen (51, 52, 53, 54) um die Drehachse (D) jede Wendestange an ihren Enden mit Führungswagen (55) verbunden ist, die auf kreisringförmig angeordneten Führungsschienen (56) geführt sind.

2. Wendestangenabzug nach Anspruch 1, **dadurch gekennzeichnet, daß** die Führungsschienen (56) entlang ihrer kreisringförmigen Innen- und Außenseite je eine Führungsnut (561) aufweisen und die Führungswagen (55) eine hierzu korrespondierende hinterschnittene Gleitnut (559) aufweisen.

3. Wendestangenabzug nach Anspruch 1 oder 2, **dadurch gekennzeichnet, daß** die Führungswagen (55) mit an der Führungsnut (561) der Führungsschienen (56) abrollenden Wälzkörpern ausgerüstet sind.

4. Wendestangenabzug nach einem der Ansprüche 1 bis 3, **dadurch gekennzeichnet, daß** mehrere Wendestangen (53, 54) mit ihren jeweiligen Führungswagen (55) auf einer gemeinsamen Führungsschiene (56) geführt sind.

5. Wendestangenabzug nach einem der Ansprüche 1 bis 4, **dadurch gekennzeichnet, daß** die einer Wendestange (51, 52, 53, 54) zugeordneten Führungswagen (55) mittels einer Traverse (59) starr miteinander verbunden sind.

6. Wendestangenabzug nach Anspruch 5, **dadurch gekennzeichnet, daß** die Traversen (59) ringförmig oder ringsegmentförmig ausgebildet sind und an jeder Traverse mindestens zwei Führungswagen (55) für die Führung der jeweiligen Wendestange (51, 52, 53, 54) befestigt sind.

7. Wendestangenabzug nach einem der Ansprüche 5 oder 6, **dadurch gekennzeichnet, daß** jede Traverse (59) einen Zahnkranz (58) oder ein Zahnkranzsegment umfaßt, welche mit dem Drehantrieb für die Wendestangen (51, 52, 53, 54) in Wirkverbindung stehen.

8. Wendestangenabzug nach einem der Ansprüche 1 bis 7, **dadurch gekennzeichnet, daß** alle Wendestangen (51, 52, 53, 54) über einen gemeinsamen Drehantrieb (7) rotierend bzw. reversierend antreibbar sind.

9. Wendestangenabzug nach Anspruch 8, **dadurch gekennzeichnet, daß** die Wendestangen (51, 52, 53, 54) mit voneinander verschiedenen Rotations- bzw. Reversiergeschwindigkeiten und/oder in verschiedenen Drehrichtungen antreibbar sind.

10. Wendestangenabzug nach einem der Ansprüche 1 bis 9, **dadurch gekennzeichnet, daß** die Führungsschienen (56) vertikal übereinander angeordnet sind.

11. Wendestangenabzug nach einem der Ansprüche 1 bis 10, **dadurch gekennzeichnet, daß** die Führungswagen (55) oberhalb der Führungsschienen (56) aufsitzend oder unterhalb der Führungsschienen (56) hängend geführt sind.

12. Wendestangenabzug nach einem der Ansprüche 1 bis 11, **dadurch gekennzeichnet, daß** die Führungsschienen (56) in einem Teilabschnitt ihres kreisförmigen Verlaufs ein herausnehmbares Öffnungsstück (562) aufweisen, welches gegen ein mit einem Ersatzführungswagen (553) bestücktes Ersatzstück (563) austauschbar ist.

13. Wendestangenabzug nach einem der Ansprüche 1 bis 12, **dadurch gekennzeichnet, daß** die Führungswagen (55) eine geschlossene Schmierstoffkassette (552) für eine wartungsfreie Schmierung gegenüber der Führungsschiene (56) aufweisen.

14. Wendestangenabzug nach einem der Ansprüche 1 bis 13, **dadurch gekennzeichnet, daß** die Führungsschienen (56) aus mehreren Segmenten zusammengefügt sind.

15. Wendestangenabzug mit einer dem Wendestangenabzug (5) vorgelagerten Flachlegeeinrichtung (4), die mittels Drehantrieb sowie Führungswagen (55) und einer Führungsschiene (56) gemäß einem der vorangehenden Ansprüche rotierend oder reversierend antreibbar ist.
